# EUROPEAN PATENT APPLICATION

(11) **EP 2 166 483 A1**
(43) Date of publication of application: **24.03.2010**
(21) Application number: 08164506.1
(22) Date of filing: 17.09.2008
(51) Int. Cl.: G06F 21/24, H04L 9/32

(54) **Method and device for creating a digital signature**

(71) Applicant: TDS TODOS DATA SYSTEM AB, 414 58 Göteborg (SE)
(72) Inventor: Gullberg, Peter, 421 60, Västra Frölunda (SE)
(74) Representative: Fritsche, Daniel

(57) **Abstract**

A method for creating a digital signature (32) associated with a user (25) having a code-generating device (23) comprising a data interface (43), a display device (40), a user input device (41) and processing circuitry (45), the digital signature (32) being indicative of at least one signature object (26) comprising a signature element (27, 28) having been pre-selected for display to the user (25). The method comprises the steps of: receiving (201), through the data interface (43), signature data (31) from a user communication device (22), the signature data (31) comprising reference data indicating a location of the signature object and a corresponding identifier code, uniquely identifying the signature object (26); acquiring (201), through the data interface (43), the signature object (26) comprising the signature element (27, 28) having been pre-selected for display; determining (202) a candidate identifier code for the signature object (26) comprising the signature element (27, 28) having been pre-selected for display; displaying (204), if the candidate identifier code matches the identifier code comprised in the signature data, information indicative of the signature element (27, 28) having been pre-selected for display using the display device (40); determining (206), if user input indicative of approval of the displayed information is received through the user input device (41), a digital signature (32) based on the signature data (31) using the processing circuitry (45); and providing (206) the digital signature (32) to the user communication device (22).

## Description

### Technical Field of the Invention

The present invention relates to methods and devices for creating a digital signature.

### Technical Background

With the currently ongoing rapid development in the field of electronic transactions between parties, there is an ever-increasing need for digital signing that fulfills the needs of all parties to a transaction and, basically, performs the same type of functionality as a traditional handwritten signature on a contract. In this context, it should be remembered that traditional paper-based signed documents are practically universally applicable, and additionally have a number of implicit and explicit rules aimed at ensuring that the person signing the document gives his informed consent, whereby a high level of non-repudiation is achieved.

When exchanging digital objects, such as documents, in the electronic world, there is a need to prove the authenticity of such digital objects. This is typically achieved by generating a so-called digital signature of the digital object that establishes that it is the sender that has signed the digital object, and also that the digital object has not been modified.

Needless to say, such a digital object may be provided in a variety of formats, and practically any user should be able to digitally sign a digital object of any format.

Accordingly, one requirement for widespread use of digital signing is that there should be a digital signature infrastructure enabling digital signing of virtually any digital object.

One such digital signature infrastructure is XMLDSIG, which is a framework for creating and signing XML-documents that indicate one or several digital object(s) for signing.

In fact, most initiatives worldwide on digital signatures are derivate work based on W3Cs (www.w3.org) XML-signatures. Currently, many authorities, such as governments and financial institutions have adopted and are implementing various XML-signature schemes.

Although being useable for practically any data format and by practically any user, the currently available XML-signature schemes fail to provide for one of the most obvious and important features of traditional handwritten signatures, namely to ensure that the person signing a document has had the opportunity to review exactly the document he is signing.

In other words, current digital signature solutions typically do not provide for a secure manner of ensuring that the person signing a digital object gives his informed consent to the content of the signed digital object. On the other end of the transaction, such lack of certainty regarding the informed consent translates into doubt regarding the non-repudiation of the transaction.

Using currently available digital signing solutions, it is, of course possible to display the content of the digital object to be signed through the display of the user communication device of the person signing the digital object, such as his personal computer. However, personal computers and the like are today not seen as secure, and a display through the personal computer can therefore not provide for the desired level of certainty with regard to informed consent and/or non-repudiation.

This flaw of currently available digital signing solutions has previously been recognized and various solutions have been presented.

For instance, US2002/0053028 discloses a secure digital signer device which may allow for review of the transaction to be signed directly from the device.

However, as is also pointed out in US2002/0053028, such an approach, in which the entire transaction is displayed, may be very demanding on the computing power of the secure digital signer, which translates into a high cost of the device.

Furthermore, to provide for the desired capability of digitally signing one or several digital objects of virtually any format, the digital signer disclosed in US2002/0053028 would have to support all available current and future data formats, which is obviously very difficult and might even be not at all feasible.

### Summary of the Invention

In view of the above-mentioned and other drawbacks of the prior art, a general object of the present invention is to provide an improved digital signing solution, and in particular to provide a universal digital signing scheme having an improved resistance against fraud and a higher level of non-repudiation.

According to a first aspect of the present invention, these and other objects are achieved through a method for creating a digital signature associated with a user having a code-generating device comprising a data interface, a display device, a user input device and processing circuitry, the digital signature being indicative of at least one signature object comprising a signature element having been pre-selected for display to the user, the method comprising the steps of: receiving, through the data interface, signature data from a user communication device, the signature data comprising reference data indicating a location of the signature object and a corresponding identifier code, uniquely identifying the signature object; acquiring, through the data interface, the signature object comprising the signature element having been pre-selected for display; determining a candidate identifier code for the signature object comprising the signature element having been pre-selected for display; displaying, if the candidate identifier code matches the identifier code comprised in the signature data, information indicative of the signature element having been pre-selected for display using the display device; determining, if user input indicative of approval of the displayed information is received through the user input device, a digital signature based on the signature data using the processing circuitry; and providing the digital signature to the user communication device.

The present invention is based upon the realization that the desired informed consent/non-repudiation can be achieved in a user-friendly and universally applicable manner by adding to a universally applicable digital signing scheme based on referencing signature objects, such as an XML-based digital signing scheme, the capability of selectively displaying a pre-selected signature element comprised in a signature object to be signed.

The present inventor has further realized that an increased level of non-repudiation/informed consent can be achieved by making the display of the pre-selected signature element conditional upon a verification, in the code-generating device associated with the user, of the authenticity of the signature object comprising the pre-selected signature element.

Hereby, all the advantages of the currently available universally applicable digital signing schemes can be combined with display of pre-selected "important" elements of, for example, a transaction in the secure environment of the code-generating device associated with the user.

Furthermore, the requirements on the information-handling capability of the code-generating device may be considerably reduced as compared to the prior art solutions.

It should be noted that the "signature element" may be a part of a "signature object" or may be the entire signature object. In cases when the signature object is a digital object in the form of, for example, a document defining a transaction, a signature element may be an "important" part of the document, such as the amount of the transaction.

Furthermore, several signature elements may be comprised in a particular signature object, in which case each signature element may represent pre-selected information that is judged by the host to be important that the user has viewed prior to providing his digital signature. Such signature elements may, for example, represent information such as the amount of money to transfer, the name of the recipient and the beneficiary account.

The acquired signature object comprising the signature element having been pre-selected for display to the user may advantageously be received from the user communication device. It should, however, be understood that the pre-selected signature element may be received from any other suitable source, such as through download from a location indicated by the host.

The reference data indicating the location of the signature object comprising the signature element(s) to be displayed to the user may advantageously comprise a predetermined SeeWhatYouSign (SWYS) tag. This tag may be used by the code-generating device to determine which signature object(s) should be acquired.

When the signature object(s) comprising the signature element(s) to be displayed is provided to the code-generating device by the user-communication device, the SWYS tag comprised in the reference data may be evaluated by the user-communication device to enable providing the correct signature object to the code-generating device. In this case, the code-generating device is not required to react upon the SWYS-tag in the reference data.

Furthermore, each of the identifier codes may be a cryptographic checksum of its respective signature object. Hereby, the authenticity of the signature object(s) to be signed can be verified securely and conveniently.

Examples of a cryptographic checksum include, for example, a message digest (SHA-1), a message authentication code (MAC), a digest and a hash-value.

The method according to the present aspect of the invention may further comprise the step of extracting the signature element from the signature object.

Furthermore, the extracting may be performed by scanning the signature object and extracting any data indicated as information to be displayed to the user.

The data to be extracted may, for example, be indicated using a predetermined tag of the above-mentioned type, a "SeeWhatYouSign"-tag (SWYS-tag). It should be understood that although the SWYS-tag in the reference data performs the same basic functionality as the SWYS-tag in the signature object (namely to indicate the presence of a signature element to be displayed to the user, the SWYS-tag in the reference data may or may not be realized in the same way as the SWYS-tag in the signature object.

By extracting the signature element in this manner, the only additional information required in the request for digital signing is that a particular signature object comprises one or several signature elements selected for display to the user. Hereby, interoperability with existing digital signature schemes, such as the WC3 XML-signature scheme is ensured, or at least facilitated.

Furthermore, the step of determining the digital signature may comprise the steps of determining a cryptographic checksum of the signature data; and determining the digital signature based on the cryptographic checksum and a cryptographic key associated with the user.

Moreover, the step of determining the digital signature may comprise the steps of requesting the user to enter user input indicative of approval of the displayed information; providing, if the user input is entered, the cryptographic checksum of the signature data to a cryptographic module associated with the user; and receiving the digital signature from the cryptographic module.

The user input may, for example, be provided in the form of a PIN (Personal Identification Number), but may alternatively or additionally, comprise a simple "OK" or a biometric authentication of the user. By involving a biometric authentication, user presence can be established.

According to a currently preferred embodiment of the method according to the present invention, the digital signature that is created may be (a part of) an XML-signature. Accordingly, in this embodiment (as defined by "XML Signature Syntax and Processing (Second Edition)" issued by the W3C on 10 June 2008), the "signature data" received by the code-generating device corresponds to the *SignedInfo* element, the "reference data" corresponds to the *URI* attribute of a *Reference* element, the "identifier code" corresponds to the *DigestValue,* and the "digital signature" corresponds to the *Signature Value* element. The person skilled in the art will, however, realize that various embodiments of the present invention will also comply with other digital signature schemes, such as PKCS-7 or similar.

According to a second aspect of the present invention, the above-mentioned and other objects are achieved through a code-generating device, for creating a digital signature, the code-generating device comprising: a data interface for receiving data from a user communication device; a display device for displaying data to a user of the code-generating device; a user input device for receiving user input; and processing circuitry configured to: receive, through the data interface, signature data from the user communication device, the signature data comprising reference data indicating a location of at least one signature object and at least one corresponding identifier code uniquely identifying the at least one signature object; acquire, through the data interface, a signature object comprising a signature element having been pre-selected for display; determine a candidate identifier code for the signature object including the signature element having been pre-selected for display; provide, if the candidate identifier code matches the identifier code comprised in the signature data, information indicative of the signature element having been pre-selected for display to the display device for display to the user; determine, if user input indicative of approval of the displayed information is received through the user input device, a digital signature based on the signature data; and provide the digital signature to the user communication device.

The "data interface" is an interface for acquiring data into the code-generating device, and may be an interface for signals, such as electrical signals, optical signals, acoustic signals etc. The data interface may configured for serial or parallel data communication.

By "user input device" should be understood any device enabling user input into the code-generating device. For example, the user input device may be a key pad, a touch screen, a click wheel, a toggle, a microphone, a sensor for biometric input etc, or any combination of the above.

The "processing circuitry" may be provided in the form of a one or several electronic components, such as one or several micro-processors.

The code-generating device may advantageously be configured to interact with a cryptographic module associated with the user.

The "cryptographic module" may be a software or hardware module which is adapted to perform cryptographic operations on data, such as signing, encrypting, decrypting or determining a cryptographic checksum of the data. The cryptographic module may implement any cryptographic algorithm, symmetric, non-symmetric or cryptographic hash functions. Examples of a symmetric cryptographic algorithm, for example, include a triple-DES MAC, and examples of an asymmetric cryptographic algorithm, for example, include the secret/public key pair approach often referred to as "public key infrastructure". An example of a cryptographic hash function is SHA-1.

The processing circuitry comprised in the code-generating device may be configured to: display, through the display device, a request for user input indicative of approval of the displayed information; provide, if the user input is entered, a cryptographic checksum of the signature data to the cryptographic module; and receive the digital signature from the cryptographic module.

The code-generating device may further comprise a connector for connecting the processing circuitry to a removably arranged electronic circuit comprising the cryptographic module.

In this embodiment, the cryptographic module associated with the user may preferably be provided in the form of a removable electronic circuit, such as the secure chip on a so-called smart card, the code-generating device having a connector configured to enable communication between the processing circuitry comprised in the code-generating device and the removable electronic circuit.

Alternatively, the code-generating device may comprise a wireless interface for enabling wireless communication with an external cryptographic module.

According to a further alternative, the cryptographic module may be comprised in the processing circuitry.

In any case, the cryptographic module may contain a representation of a user-specific secret cryptographic key which can be utilized to perform the desired cryptographic operation(s) on data provided to the cryptographic module.

Further variations of and effects associated with the present second aspect of the invention are largely analogous to those described above in connection with the first aspect of the invention.

According to a third aspect of the present invention, the above-mentioned and other objects are achieved through a method for creating a digital signature associated with a user having a code-generating device, the method comprising the steps of: receiving, from a host, a request for the digital signature being indicative of at least one signature object, including a signature object comprising a signature element having been pre-selected for display to the user providing, to the code-generating device, signature data comprising reference data indicating a location of the at least one signature object and at least one corresponding identifier code, uniquely identifying the at least one signature object; receiving, from the code-generating device, a digital signature based on the signature data; and providing the digital signature to the host.

According to one embodiment, the user communication device may be a personal computer.

This is typically the case for online banking systems, where the user handles his accounts and performs transactions, such as paying bills, over the internet.

According to another embodiment, the user communication device may be a mobile phone or a personal digital assistant.

According to yet another embodiment, the user communication device may be an automated teller machine (ATM).

The method according to the present aspect of the invention may further comprise the step of providing, to the code-generating device, the signature object comprising the signature element having been pre-selected for display to the user.

To determine which signature object to provide to the code-generating device, the method according to the present aspect of the invention may further comprise the step of evaluating the reference data provided from the host to identify the signature object comprising the signature element(s) having been pre-selected for display to the user.

Further variations of and effects associated with the present third aspect of the invention are largely analogous to those described above in connection with the first and second aspects of the invention.

According to a fourth aspect of the present invention, the above-mentioned and other objects are achieved through a user-communication device comprising: a first data interface for enabling communication with a host; a second data interface for enabling communication with the code-generating device; and processing circuitry configured to: receive, from the host through the first data interface, a request for a digital signature being indicative of at least one signature object, including a signature object comprising a signature element having been pre-selected for display to the user; provide, to the code-generating device through the second data interface, signature data comprising reference data indicating a location of the at least one signature object and at least one corresponding identifier code, uniquely identifying the at least one signature object; receive, from the code-generating device, a digital signature based on the signature data; and provide the digital signature to the host.

According to fifth and sixth aspects of the present invention, furthermore, the above-mentioned and other objects are achieved through a method for performing a transaction, comprising the steps of: receiving a request for the transaction from a user via a user-communication device; providing at least one signature object comprising a signature element selected for display to the user; requesting, via the user-communication device, the user to provide a digital signature for/of the signature object; receiving, from the user-communication device, the digital signature; evaluating the digital signature; and if the digital signature indicates that the user has viewed and approved information indicative of the signature element selected for display, performing the transaction, and through a transaction service provider, comprising a data interface and processing circuitry configured to: provide at least one signature object comprising a signature element selected for display to the user; transmit to the user-communication device, through the data interface, a request for the user to provide a digital signature for/of the signature object; receive from the user-communication device, through the data interface, the digital signature; evaluate the digital signature; and if the digital signature indicates that the user has viewed and approved information indicative of the signature element selected for display, perform the transaction.

The actual selection of one or several signature element(s) to be displayed to the user may be performed by the host (the transaction service provider) by providing one or several tag(s) (SWYS-tags) inside the signature object to indicate the signature element(s).

Additionally, the transaction service provider may provide reference data for a particular signature object with a tag indicating that the signature object comprises one or several signature element(s) to be displayed to the user.

This tag may be evaluated by the user-communication device to enable providing the correct signature object to the code-generating device.

Additionally, the above-mentioned and other objects are achieved through a computer program module configured to perform the steps of the method according to the third aspect of the present invention when run on processing circuitry comprised in the user-communication device according the present invention, and through a computer program module configured to perform the steps of the method according to the fifth aspect of the present invention when run on processing circuitry comprised in the transaction service provider according the present invention.

### Brief Description of the Drawings

These and other aspects of the present invention will now be described in more detail, with reference to the appended drawings showing a currently preferred embodiment of the invention, wherein:
Fig 1 schematically illustrates a secure transaction system according to the present invention;
Fig 2 is a schematic illustration of the high level interactions between a host, a user-communication device, a code-generating device and a user when implementing various aspects of the present invention;
Fig 3 schematically illustrates a code-generating device according to an embodiment of the present invention when connected to a user-communication device according to an embodiment of the present invention;
Fig 4 is a schematic block diagram of the code-generating device in fig 3;
Fig 5 is a flow-chart schematically illustrating a method for generating a digital signature performed by the user-communication device in fig 1;
Fig 6 is a flow-chart schematically illustrating a method for generating a digital signature performed by the code-generating device in fig 1, and its relation to the method in fig 5; and
Fig 7 is a flow chart illustrating actions performed in a digital signing system including a user-communication device and a code-generating device according to various embodiments of the present invention.

### Detailed Description of a Preferred Embodiment of the Invention

In the following description, the present invention is described with reference to a code-generating device in the form of a smart card reader, and a user-communication device in the form of a personal computer.

It should be noted that this by no means limits the scope of the present invention, which is equally applicable to other types of code-generating devices and user-communication devices, such as in particular code-generating devices in which the cryptographic module is embodied by the processing circuitry comprised therein.

Additionally, the code-generating device may have any other kind of user input means other than a keypad, such as a touch display, a so-called click wheel, biometric input etc.

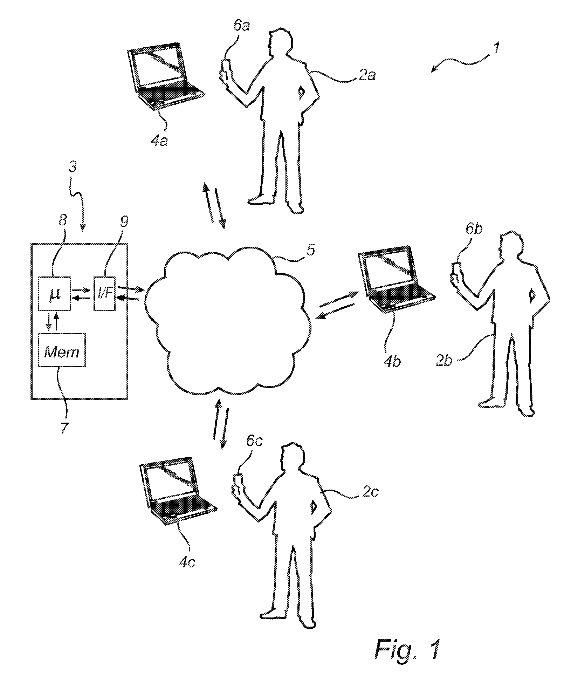

Fig 1 schematically illustrates a secure transaction system 1, in which each of a plurality of users 2a-c communicates with a host, here embodied by a transaction server system 3, through their respective personal computers 4a-c which are securely connected to the transaction server system 3 over a network 5, such as the internet. Each user 2a-c has his personal code-generating device 6a-c.

The transaction server system 3 includes a database 7 for storing user data, such as, for each user, a user ID, a seed for creation of a user-specific cryptographic key for symmetric keys, and storing a public key certificate for asymmetric keys, and account details. The database 7, which is here illustrated as a computer memory in a transaction server, may be provided internally to the transaction server or may reside in a (possibly remotely located) separate device which may be configured to communicate data stored in the database with one or several transaction servers. The transaction server system 3, additionally, includes processing circuitry 8, which is configured to communicate with the database 7, and a network interface 9, through which the transaction server system 3 communicates with the user communication devices 4a-c over the network 5. The processing circuitry 8 further comprises a cryptographic module, which is, in this context, often referred to as a Host Security Module (HSM).

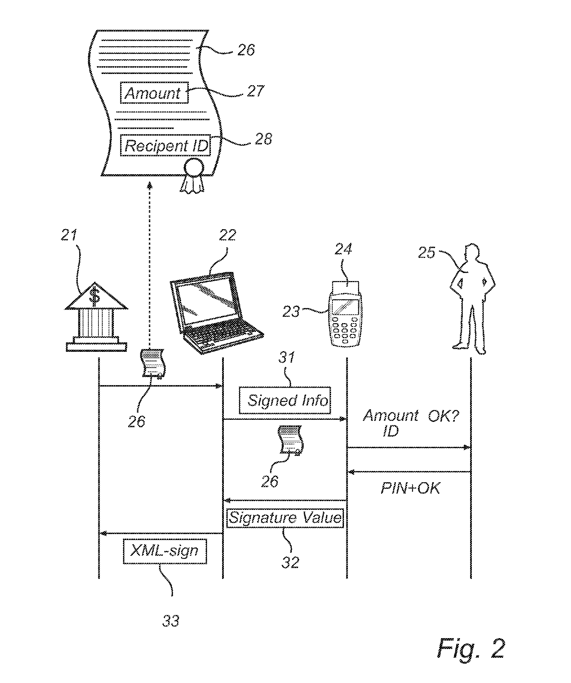

Fig 2 schematically shows the entities involved in a typical application for the secure digital signing procedure according to the various aspects of the present invention.

Referring to fig 2, the entities are, from left to right in the figure, a host 21, here a transaction service provider in the form of a bank, a user-communication device 22 in the form of a personal computer, a code-generating device 23 in the form of a smart card reader having a cryptographic module 24 in the form of a smart card provided therein, and a user 25 being associated with the code-generating device 23, or, more specifically, with the smart card 24. In a situation such as that depicted in fig 2, the smart card has typically been issued to the user 25 by the host 21.

Before performing a transaction having previously been requested by the user 25, the host 21 will typically require the user to sign the transaction. According to one embodiment, utilizing a signature scheme which is compliant with the above-mentioned XML-signature, the host 21 will then communicate to the user-communication device which signature object(s) should be signed by the user 21. In this particular example, the signature object to be signed, represented by the stylized document 26 in fig 2 may be transmitted from the host 21 to the user-communication device 22. It should be noted that the host 21 may equally well only transmit reference data, which may be in the form of a URI (Universal Resource Identifier), to the user-communication device 22, and let the user-communication device 22 acquire the signature object 26 using the URI.

To achieve a high level of non-repudiation for the transaction, the host 21 requires the returned digital signature to contain proof that the user 25 has viewed at least the most important items of the transaction 26 in a secure environment before he has signed the transaction.

To this end, the host 21 selects one or several signature element(s) comprised in the signature object 26 for display to the user 25. In this particular example, the selected signature elements 27, 28 may be the amount 27 to be transferred and the ID 28 of the intended recipient, as is indicated in the enlarged representation of the signature object 26.

The selection performed by the host 21 may advantageously be performed by indicating the signature elements 27, 28 in the signature object 26 using respective SWYS-tags, and indicating in the reference data, using a SWYS-tag, that the particular signature object 26 comprises signature elements 27, 28 selected for display to the user 25.

When having received the signature object 26 and the SWYS-tagged reference data, the user-communication device 22 generates signature data, here in the form of the SignedInfo object of the XML-signature, by calculating a cryptographic checksum of the signature object 26 and assembling the SignedInfo object 31. The SignedInfo object 31 comprises reference data indicating the location of the signature object 26, and a cryptographic checksum in the form of a digest of the signature object 26. The SignedInfo object 31 additionally contains various elements known to the skilled person, such as an element identifying the canonicalization method, an element identifying the signature method and an element identifying the digest method.

The SignedInfo object 31 is then transmitted to the code-generating device 23. Since the user-communication device 22 has determined that the signature object 26 includes signature elements 27, 28 having been pre-selected for secure display to the user 25, the user-communication device 22 additionally provides the signature object 26 to the code-generating device 23, as is schematically indicated in fig 2.

Upon receiving the SignedInfo object 31 and the signature object 26, the code-generating device checks the authenticity of the signature object 26 and, if the signature object 26 is determined to be authentic, displays the SWYS-tagged signature elements 27, 28 to the user 25.

If the user 25 approves of the signature elements 27, 28 displayed to him (the amount of the transaction and the recipient ID), he enters his PIN.

Upon receiving the "OK" from the user 25, the code-generating device 23 determines the digital signature, the SignatureValue-object 32, and transmits this SignatureValue-object 32 to the user-communication device 22.

The user-communication device 22 forwards the SignatureValue-object 32 to the host 21 in the prescribed format, here included in a signed XML-document 33 comprising the SignatureValue-object 32, whereupon the host 21 performs the requested transaction.

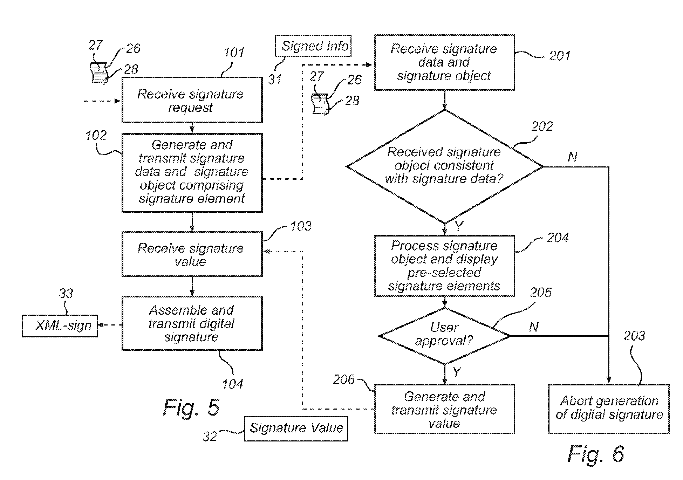

The interaction between the user-communication device 22 and the code-generating device 23 will be described in greater detail below in connection with figs 5 and 6.

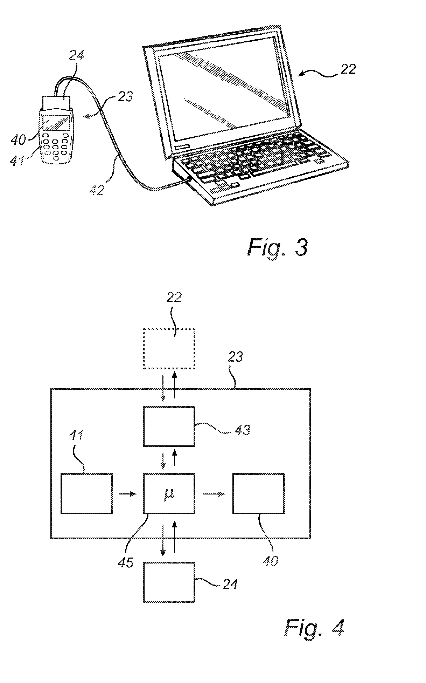

Turning now to fig 3, the code-generating device 23 is shown connected via a data cable 42 to the user-communication device 22.

As can be seen in fig 3, the code-generating device has a display device in the form of display 40 and a user input device in the form of key pad 41.

Fig 4 is a schematic block diagram of the code-generating device 23 in fig 3. Referring to fig 4, the code-generating device 23 according to the present embodiment of the invention, in addition to the display device 40 and the user input device 41, comprises processing circuitry in the form a microprocessor 45, and a data interface 43 for enabling communication between the microprocessor 45 and the user-communication device 22.

As is also indicated in fig 4, the microprocessor 45 is adapted to communicate with the cryptographic module 24 comprised in the smart card.

Figs 5 and 6 are flow-charts schematically illustrating the methods according to various embodiments of the invention, carried out in the user-communication device 22 and the code-generating device 23, respectively, as well as the interaction between the user-communication device 22 and the code-generating device 23.

Referring first to fig 5 (and fig 2), the code-generating device 22 receives a signature request from the host 21 in a first step 101. The signature request includes information identifying the signature object(s) 26 to be signed by the user 25 as well as an indication that the signature object 26 comprises one or several signature elements 27, 28 to be displayed to the user 25.

In the subsequent step 102, the user-communication device 22 evaluates the data received from the host 21 and generates signature data, which may be in the form of a SignedInfo-object 31 of an XML-signature, as described above in connection with fig 2. Since the data received from the host 21 in this case includes an indication that the signature object includes (or should include) signature objects 27, 28 to be displayed to the user 25, the user-communication device 22, in addition to the SignedInfo-object 31, transmits the signature object 26 comprising the pre-selected signature elements 27, 28 to the code-generating device 23.

Turning now to fig 6, the code-generating device 23, in step 201, receives the signature data 31 and the signature object 26 comprising the pre-selected signature elements 27, 28 from the user-communication device 22.

In the next step 202, the code-generating device checks whether the received signature object 26 is authentic, by calculating the digest of the signature object 26 and comparing the calculated digest with the digest included in the SignedInfo-object 31 received in step 201.

If the signature object 26 can not be authenticated, the method proceeds to step 203 and aborts the generation of the digital signature.

If, on the other hand, the signature object 26 can be authenticated, the method proceeds to process the signature object 26 to locate to SWYS-tagged signature elements 27, 28 and display these to the user 25 using the display 40 comprised in the code-generating device 23, in step 204.

If user approval is not received in step 205, the process again continues to abort the generation of the digital signature in step 203. Nonapproval of the user 25 can, for example, be determined by receiving a signal indicative thereof from the keypad 41 - the user 25 may have pressed a "NOT OK" key, or through the absence of a user approval within a predetermined period of time.

If, on the other hand, user approval is obtained, the process is allowed to proceed to the next step. User approval can be determined by a simple "OK" received from the user, or through entry of the user's 25 PIN (Person Identification Number).

Following receipt of user approval, the process continues to step 206, where the digital signature is generated. When XML-signatures are used, the digest of the SignedInfo-object 31 is determined by the code-generating device 23 and subsequently signed using the cryptographic module 24 comprised in the smart card 24. The result of the signing, referred to as the SignatureValue-object 32 is transmitted to the user-communication device 22 for further processing and forwarding in the prescribed format to the host 21.

Again referring to fig 5, the user-communication device 22 receives the SignatureValue-object in step 103.

Thereafter, in step 104, the user-communication device 22 performs the process of including the received SignatureValue-object 32 in an XML-signature 33, which is transmitted to the host 21.

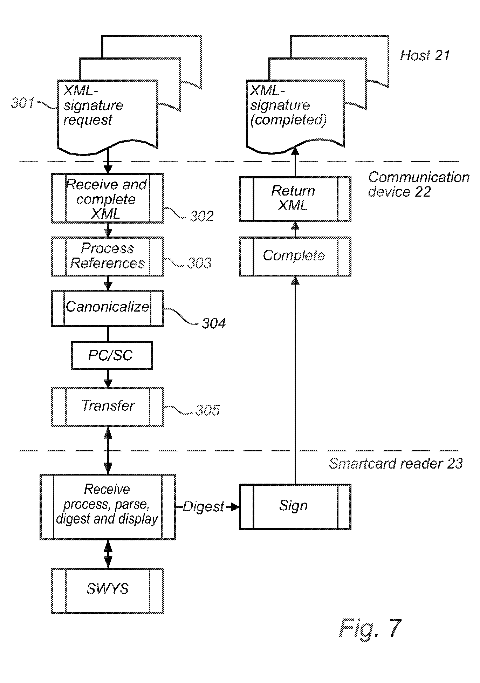

Finally, with reference to fig 7, an example of the interaction between a user-communication device in the form of a personal computer 22 and a code-generating device 23 in the form of a smart-card reader when creating a digital signature will be described in detail.

Referring to fig 7, the user communication device, which may be implemented as a software module in the personal computer 22, receives a request from the host for digitally signing an XML-document, as is indicated by the box 301 in fig 7.

Upon receiving the request, the user communication device prepares the XML-document by completing it 302 in such a way that it complies with the above-mentioned XMLDSIG-standard, processing 303 all references located in the SignedInfo element, updating the message digest for each reference, and then canonicalizing 304 the XML document.

After completion and canoncialisation, the user communication device transfers, in step 305, either fully or only necessary parts of the XML-document to the smart card reader 23, using the pc/sc smartcard interface.

The smart-card reader 23 receives the XML-document and parses all references in the Signed Info-element. For each reference element that contains the attribute "Type" with a value equal to "SWYS", the smart-card reader 23 verifies the message digest for the referenced signature object(s) and parses all elements within the signature object(s). For each signature element within the signature object(s), having the SeeWhatYouSign-attribute, the smart-card reader 23 displays the information carried by that element to the user using the display element 40, and requests the user 25 to approve the displayed information before the smart-card reader 23 continues the process.

After all references have been parsed, the smart-card reader 23 generates a message digest on the SignedInfo-object 31, and then the smart-card reader 23 generates a digital signature on the resulting message digest using the cryptographic module 24. The smart-card reader 23 then returns the signed result, the SignatureValue-object 32, to the user communication device 22. The user communication device 22 inserts the SignatureValue-object 32 into the XML-document 33 and returns the signed XML-document 33 to the host 21.

The person skilled in the art realizes that the present invention by no means is limited to the preferred embodiments described above. For example, other signature schemes, other than the XML-signature described above may be used.

Furthermore, the code-generating device 23 may be associated with a unique Terminal ID-code, stored in the code-generating device 23. This Terminal ID-code may be used, in addition to the cryptographic key associated with the user 25, to digitally sign the SignedInfo-object 31. It can hereby be established which code-generating device 23 was used by the user 25 when digitally signing a particular digital object. This information can, for example, be used to assess the validity of the digital signature in view of available information about the code-generating device 23. For instance, a particular transaction may be denied if the host 21 determines that the digital signature has been provided using a code-generating device 23 which is listed as having been compromised.

## Claims

1. A method for creating a digital signature (32) associated with a user (25) having a code-generating device (23) comprising a data interface (43), a display device (40), a user input device (41) and processing circuitry (45), the digital signature (32) being indicative of at least one signature object (26) comprising a signature element (27, 28) having been pre-selected for display to said user (25), said method comprising the steps of:
receiving (201), through said data interface (43), signature data (31) from a user communication device (22), said signature data (31) comprising reference data indicating a location of said signature object and a corresponding identifier code, uniquely identifying said signature object (26);
acquiring (201), through said data interface (43), said signature object (26) comprising said signature element (27, 28) having been pre-selected for display;
determining (202) a candidate identifier code for said signature object (26) comprising said signature element (27, 28) having been pre-selected for display;
displaying (204), if said candidate identifier code matches said identifier code comprised in said signature data, information indicative of said signature element (27, 28) having been pre-selected for display using said display device (40);
determining (206), if user input indicative of approval of said displayed information is received through said user input device (41), a digital signature (32) based on said signature data (31) using said processing circuitry (45); and
providing (206) said digital signature (32) to said user communication device (22).

2. The method according to claim 1, further comprising the step of:
extracting said signature element (27, 28) from said signature object (26).

3. The method according to claim 2, wherein said step of extracting comprises the steps of:
scanning said signature object (26); and
extracting any data (27, 28) indicated as information to be displayed to the user (25).

4. The method according to any one of the preceding claims, wherein said step of determining (206) said digital signature (32) comprises the steps of:
determining a cryptographic checksum of said signature data (31); and
determining said digital signature (32) based on said cryptographic checksum and a cryptographic key associated with said user (25).

5. The method according to claim 4, wherein said step of determining (206) said digital signature comprises the steps of:
requesting said user (25) to enter user input indicative of approval of said displayed information;
providing, if said user input is entered, said cryptographic checksum of the signature data to a cryptographic module (24) associated with said user (25); and
receiving said digital signature (32) from said cryptographic module (24).

6. A code-generating device (23), for creating a digital signature (32), the code-generating device (23) comprising:
a data interface (43) for receiving data from a user communication device (22);
a display device (40) for displaying data to a user (25) of said code-generating device (23);
a user input device (41) for receiving user input; and
processing circuitry (45) configured to:
receive (201), through said data interface (43), signature data (31) from said user communication device (22), said signature data (31) comprising reference data indicating a location of at least one signature object (26) and at least one corresponding identifier code uniquely identifying said at least one signature object (26);
acquire (201), through said data interface (43), a signature object (26) comprising a signature element (27, 28) having been pre-selected for display;
determine (202) a candidate identifier code for said signature object (26) including said signature element (27, 28) having been pre-selected for display;
provide (204), if said candidate identifier code matches said identifier code comprised in said signature data (31), information indicative of said signature element (27, 28) having been pre-selected for display to said display device (40) for display to the user (25);
determine (206), if user input indicative of approval of said displayed information is received through said user input device (41), a digital signature (32) based on said signature data (31); and
provide (206) said digital signature (32) to said user communication device (22).

7. The code-generating device (23) according to claim 6, wherein said processing circuitry (45) is further configured to:
extract said signature element (27, 28) from said signature object (26).

8. The code-generating device (23) according to claim 6 or 7, wherein said processing circuitry (45) is configured to:
display, through said display device (40), a request for user input indicative of approval of said displayed information;
provide, if said user input is entered, a cryptographic checksum of the signature data to a cryptographic module (24); and
receive said digital signature (32) from said cryptographic module (24).

9. A method for creating a digital signature associated with a user (25) having a code-generating device (23), said method comprising the steps of:
receiving (101), from a host (21), a request for said digital signature being indicative of at least one signature object, including a signature object (26) comprising a signature element (27, 28) having been pre-selected for display to said user (25);
providing (102), to said code-generating device (23), signature data (31) comprising reference data indicating a location of said at least one signature object (26) and at least one corresponding identifier code, uniquely identifying said at least one signature object (26);
receiving (103), from said code-generating device (23), a digital signature (32) based on said signature data (31); and
providing (104) said digital signature (32, 33) to said host (21).

10. The method according to claim 9, further comprising the step of:
providing (102), to said code-generating device (23), said signature object (26) comprising said signature element (27, 28) having been pre-selected for display to the user (25).

11. A user-communication device (22) comprising:
a first data interface for enabling communication with a host (21);
a second data interface for enabling communication with said code-generating device (23); and
processing circuitry configured to:
receive (101), from said host (21) through said first data interface, a request for a digital signature being indicative of at least one signature object, including a signature object (26) comprising a signature element (27, 28) having been pre-selected for display to said user (25);
provide (102), to said code-generating device (23) through said second data interface, signature data (31) comprising reference data indicating a location of said at least one signature object (26) and at least one corresponding identifier code, uniquely identifying said at least one signature object;
receive (103), from said code-generating device (23), a digital signature (32) based on said signature data (31); and
provide (104) said digital signature (32, 33) to said host (21).

12. A computer program module configured to perform the steps of the method according to claim 9 or 10 when run on processing circuitry comprised in the user-communication device (22) according to claim 11.

13. A method for performing a transaction, comprising the steps of:
receiving a request for said transaction from a user via a user-communication device (22);
providing at least one signature object (26) comprising a signature element (27, 28) selected for display to said user (25);
requesting, via said user-communication device (22), said user (25) to provide a digital signature (32, 33) indicative of said signature object (26);
receiving, from said user-communication device (22), said digital signature (32, 33);
evaluating said digital signature; (32, 33) and
if said digital signature indicates that the user has viewed and approved information indicative of said signature element (27, 28) selected for display, performing said transaction.

14. A transaction service provider (3, 21), comprising a data interface (9) and processing circuitry (8) configured to:
provide at least one signature object (26) comprising a signature element (27, 28) selected for display to said user (25);
transmit to said user-communication device (22), through said data interface (9), a request for said user (25) to provide a digital signature indicative of said signature object (26);
receive from said user-communication device (22), through said data interface (9), said digital signature (32, 33);
evaluate said digital signature; and
if said digital signature indicates that the user (25) has viewed and approved information indicative of said signature element (27, 28) selected for display, perform said transaction.

15. A computer program module configured to perform the steps of the method according to claim 13 when run on processing circuitry (8) comprised in the transaction service provider (3, 21) according to claim 14.
